(19) Europäisches Patentamt
European Patent Office
Office européen des brevets

(11) **EP 3 124 920 B1**

(12) **EUROPÄISCHE PATENTSCHRIFT**

(45) Veröffentlichungstag und Bekanntmachung des Hinweises auf die Patenterteilung:
**01.11.2017 Patentblatt 2017/44**

(51) Int Cl.:
***G01D 5/244*** *(2006.01)*

(21) Anmeldenummer: **15178402.2**

(22) Anmeldetag: **27.07.2015**

(54) **Positionsmesseinrichtung und Verfahren zu deren Betrieb**

Positioning device and method for the operation thereof

Dispositif de mesure de position et son procédé de fonctionnement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.02.2017 Patentblatt 2017/05**

(73) Patentinhaber: **Dr. Johannes Heidenhain GmbH 83301 Traunreut (DE)**

(72) Erfinder:
 • **CABA, Costica**
  **5280 Braunau (AT)**
 • **POMMER, Andreas**
  **5274 Burgkirchen (AT)**
 • **TUTZU, Paul Andrei**
  **5280 Braunau (AT)**
 • **VASILOIU, Victor**
  **5280 Braunau (AT)**

(56) Entgegenhaltungen:
 **EP-A1- 0 872 714   EP-B1- 1 399 715
 EP-B1- 1 606 590   DE-A1-102007 059 536
 FR-A1- 2 792 402**

**Beschreibung**

GEBIET DER TECHNIK

Die vorliegende Erfindung betrifft eine Positionsmesseinrichtung nach dem Oberbegriff des Anspruchs 1 sowie ein Verfahren zu deren Betrieb nach dem Oberbegriff des Anspruchs 9.

STAND DER TECHNIK

Zur Messung der Relativlage zweier Maschinenteile ist an einem der Maschinenteile eine Messteilung angeordnet und am anderen der zueinander beweglichen Maschinenteile eine Abtasteinheit. Bei der Positionsmessung wird die Messteilung von der Abtasteinheit abgetastet und positionsabhängige gegeneinander phasenverschobene analoge Abtastsignale generiert.

Abhängig vom geplanten Einsatz der Positionsmesseinrichtung ist einerseits das physikalische Abtastprinzip als auch die Teilungsperiode der Maßverkörperung zu wählen. Bei magnetischen und bei induktiven Abtastprinzipien sind physikalisch bedingt nur relativ große Teilungsperioden machbar. Diese Abtastprinzipien haben den Vorteil relativ große Anbautoleranzen zuzulassen. Eine große Teilungsperiode ergibt aber bei der Abtastung mit einer Abtasteinheit analoge Abtastsignale mit einer Signalperiode entsprechend dieser relativ großen Teilungsperiode. Es hat sich gezeigt, dass die Güte dieser analogen Abtastsignale derart hoch ist, dass aus diesen mit relativ einfachen Mitteln synthetische analoge Abtastsignale mit variierter Signalperiode erzeugt werden können, insbesondere mit verkleinerter Signalperiode.

Bei optischen Abtastprinzipien sind sehr viel kleinere Teilungsperioden als bei anderen Abtastprinzipien realisierbar, also analoge Abtastsignale kleiner Signalperiode. Für Folgeelektroniken kann diese Signalperiode aber zu klein sein, so dass auch hier der Bedarf besteht, die Signalperiode zu variieren, in diesem Fall zu vergrößern.

Die von der Positionsmesseinrichtung synthetisch erzeugten analogen Ausgangssignale mit gegenüber den Abtastsignalen verkleinerter oder vergrößerter Signalperiode können üblichen Folgeelektroniken zur Weiterverarbeitung zugeführt werden.

Lösungen zur synthetischen Erzeugung von analogen Ausgangssignalen variierter Signalperiode findet man in der EP 1 399 715 B1, der EP 0 872 714 A1 und der EP 1 606 590 B1.

Gemäß der EP 0 B72 714 A1 wird eine geschwindigkeitsabhängige Variation der Signalperiode vorgeschlagen. Wird eine bestimmte Geschwindigkeit überschritten, so kann auf die Ausgabe von analogen Ausgangssignalen vergrößerter Signalperiode umgeschaltet werden.

Unsere Erfindung geht aus von der EP 1 399 715 B1.

Gemäß der EP 1 399 715 B1 erfolgt die Variation der Signalperiode - hier Verkleinerung - zweier gegeneinander phasenverschobener sinusförmiger analoger Abtastsignale mittels einer Baueinheit, welcher die analogen Abtastsignale als Eingangssignale zugeführt werden und die dazu ausgelegt ist daraus zwei die Position repräsentierende digitale Positionssignale mit gegenüber den Eingangssignalen vervielfachter Frequenz zu erzeugen.

Diese Positionssignale sind eine Abfolge von Datenwörtern, von denen jedes einen Wert für das SIN- bzw. das COS- Signal repräsentiet.

Dieser Baueinheit ist ein Digital-Analog Wandler nachgeschaltet, der dazu ausgelegt ist aus diesen digitalen sinusförmigen Positionssignalen gegeneinander phasenverschobene analoge sinusförmige Ausgangssignale mit gegenüber den Abtastsignalen vervielfachter Frequenz zu erzeugen und am Ausgang zur Verfügung zu stellen.

ZUSAMMENFASSUNG DER ERFINDUNG

Aufgabe der Erfindung ist es eine Positionsmesseinrichtung anzugeben, bei der die Qualität der sinusförmigen analogen Ausgangssignale verbessert ist.

Gelöst wird diese Aufgabe durch die im Anspruch 1 angegebene Positionsmesseinrichtung.

Die Positionsmesseinrichtung umfasst eine Baueinheit zur Variation der Signalperiode zumindest eines positionsabhängigen sinusförmigen analogen Abtastsignals. Dieses Abtastsignal kann durch Abtastung eines Maßstabs gewonnen werden oder mittels eines Interferometers.

Die genannte Baueinheit umfasst eine Umsetzeinrichtung, welcher das sinusförmige analoge Abtastsignal zugeführt ist und welche dazu ausgelegt ist daraus zumindest ein sinusförmiges digitales Ausgangssignal mit gegenüber dem sinusförmigen analogen Abtastsignal variierter Signalperiode zu erzeugen. Weiterhin umfasst die Baueinheit einen Digital-Analog Wandler, welcher dazu ausgelegt ist aus dem sinusförmigen digitalen Ausgangssignal ein sinusförmiges analoges Ausgangssignal variierter Signalperiode zu erzeugen.

Die Umsetzeinrichtung ist dazu ausgelegt in Abhängigkeit der Frequenz des sinusförmigen analogen Abtastsignals die Betriebsart derart zu ändern, dass dem Digital-Analog Wandler bei hohen Frequenzen des sinusförmigen analogen Abtastsignals das sinusförmige digitale Ausgangssignal mit höherer Ausgangsrate und mit geringerer Wort-

**EP 3 124 920 B1**

breite zugeführt wird als bei niederen Frequenzen des sinusförmigen analogen Abtastsignals.

In vorteilhafter Weise ist die Umsetzeinrichtung dazu ausgelegt parallel mehrere digitale Ausgangssignale zu erzeugen, wobei die mehreren digitalen Ausgangssignale unterschiedliche Ausgangsraten und unterschiedliche Wortbreiten aufweisen. Die mehreren digitalen Ausgangssignale sind parallel einer Schalteinheit zugeführt, die dazu ausgelegt ist, in Abhängigkeit der Frequenz des sinusförmigen analogen Abtastsignals eines dieser digitalen Ausgangssignale dem Digital-Analog Wandler zuzuführen.

Vorzugsweise werden der Baueinheit im Betrieb mehrere gegeneinander phasenverschobene sinusförmige analoge Abtastsignale gleicher Frequenz zugeführt, wobei diese mehreren Abtastsignale von mehreren Detektoren einer Abtasteinheit erzeugt werden. Wird durch Abtastung nur ein einziges sinusförmiges periodisches Abtastsignal erzeugt, kann eine Interpolation dieses sinusförmigen Abtastsignals mittels eines synthetisch erzeugten Abtastsignals erfolgen oder alternativ mit einem durch Abtastung gewonnenen nicht sinusförmigen Signal.

In bevorzugter Ausgestaltung umfasst die Umsetzeinrichtung der Positionsmesseinrichtung

- eine Interpolationseinheit welcher die gegeneinander phasenverschobenen sinusförmigen analogen Abtastsignale zugeführt sind und welche dazu ausgelegt ist daraus ein die Position innerhalb einer Signalperiode der sinusförmigen analogen Abtastsignale repräsentierendes digitales Positionssignal zu erzeugen;
- einen Multiplikator welcher dazu ausgelegt ist aus dem digitalen Positionssignal ein digitales Positionssignal mit variierter Signalperiode zu erzeugen, und
- einen Funktionsgenerator welcher dazu ausgelegt ist aus dem digitalen Positionssignal variierter Signalperiode das sinusförmige digitale Ausgangssignal zu erzeugen.

Aufgabe der Erfindung ist es weiterhin ein Verfahren anzugeben mit dem die Qualität der sinusförmigen analogen Ausgangssignale verbessert ist.

Gelöst wird diese Aufgabe durch das im Anspruch 9 angegebene Verfahren.

Das Verfahren zum Betrieb einer Positionsmesseinrichtung umfasst folgende Verfahrensschritte:

- Erzeugen zumindest eines positionsabhängigen sinusförmigen analogen Abtastsignals, insbesondere durch Abtastung eines inkrementalen Maßstabs;
- Bilden zumindest eines sinusförmigen digitalen Ausgangssignals aus dem zumindest einen analogen Abtastsignal, wobei dieses Ausgangssignal gegenüber dem sinusförmigen analogen Abtastsignal eine variierte Signalperiode aufweist;
- Bilden zumindest eines sinusförmigen analogen Ausgangssignals aus dem zumindest einen sinusförmigen digitalen Ausgangssignal mittels eines Digital-Analog Wandlers;

in Abhängigkeit der Frequenz des sinusförmigen analogen Abtastsignals wird die Betriebsart der Positionsmesseinrichtung derart geändert, dass dem Digital-Analog Wandler bei hohen Frequenzen des sinusförmigen analogen Abtastsignals das sinusförmige digitale Ausgangssignal mit höherer Ausgangsrate und mit geringerer Wortbreite zugeführt wird als bei niederen Frequenzen des sinusförmigen analogen Abtastsignals.

Vorzugsweise werden parallel mehrere sinusförmige digitale Ausgangssignale aus dem zumindest einen analogen Abtastsignal gebildet, wobei diese digitalen Ausgangssignale gegenüber dem sinusförmigen analogen Abtastsignal eine variierte Signalperiode aufweisen, und wobei die mehreren digitalen Ausgangssignale unterschiedliche Ausgangsraten und unterschiedliche Wortbreiten aufweisen.

Diese mehreren digitalen Ausgangssignale werden einer Schalteinheit parallel zugeführt, die in Abhängigkeit der Frequenz des sinusförmigen analogen Abtastsignals eines dieser parallel anstehenden digitalen Ausgangssignale dem Digital-Analog Wandler zuführt.

Die erfindungsgemäß ausgestaltete Positionsmesseinrichtung und das erfindungsgemäße Verfahren hat den Vorteil, dass auch bei hohen Frequenzen der analogen Abtastsignale innerhalb einer Signalperiode eine ausreichende Anzahl an Digitalwerten dem Digital-Analog Wandler zugeführt werden, dabei wird in Kauf genommen, dass im Gegenzug die Wortbreite dieser Digitalwerte mit zunehmender Frequenz abnehmen muss, um eine optimale Betriebsweise des A/D-Wandlers zu gewährleisten.

Weitere Einzelheiten und Vorteile der vorliegenden Erfindung werden anhand der nachfolgenden Beschreibung eines Ausführungsbeispiels in Verbindung mit den Figuren erläutert.

## KURZE BESCHREIBUNG DER ZEICHNUNGEN

Es zeigt

Figur 1        eine schematische Darstellung der erfindungsgemäßen Positionsmesseinrichtung;

Figur 2     ein Blockschaltbild mit Einzelheiten des Aufbaus gemäß Figur 1;

Figur 3a    zwei um 90° gegeneinander phasenverschobene sinusförmige analoge Abtastsignale;

Figur 3b    den Verlauf des digitalen Positionssignals;

Figur 3c    den Verlauf des digitalen Positionssignals mit gegenüber dem Positionssignal vervielfachter Frequenz;

Figur 3d    den Verlauf der digitalen Ausgangssignale der Umsetzeinrichtung gemäß Figur 1 und Figur 2;

Figur 3e    die analogen Ausgangssignale, und

Figur 4     den Aufbau eines Ausführungsbeispiels des Funktionsgenerators aus Figur 2.

**BESCHREIBUNG DER AUSFÜHRUNGSFORMEN**

Die Erfindung wird nachfolgend an einem Beispiel erläutert, bei dem die Signalperiodenvariation eine Verkleinerung der Signalperiode ist. Eine Verkleinerung der Signalperiode hat im Betrieb der Positionsmesseinrichtung eine Frequenzvervielfachung des Ausgangssignals gegenüber dem Abtastsignal zur Folge. Nachfolgend wird mit k der Vervielfachungsfaktor bezeichnet. Die vervielfachte Frequenz ist somit

$$k \times f, \text{ mit } k \in \mathbb{N} \text{ und } f = \text{Frequenz der Abtastsignale}$$

Die Erfindung ist aber nicht auf die Verkleinerung der Signalperiode beschränkt, in gleicher Weise kann die Variation auch eine Vergrößerung der Signalperiode sein. Der Faktor k ist dann zu wählen als

$$k \in \frac{1}{\mathbb{N}}, \text{ mit } \mathbb{N} > 1$$

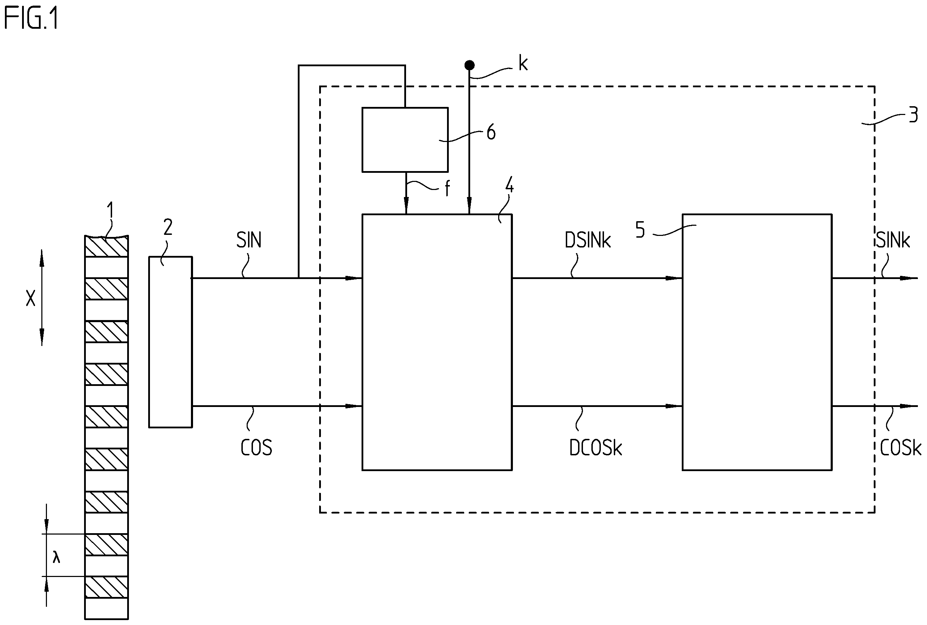

Anhand der Figur 1 wird das Prinzip der Erfindung anhand eines Blockschaltbildes erläutert, wobei k = 2 ist.
Die Positionsmesseinrichtung umfasst eine Messteilung 1 mit einer inkrementalen mechanischen Teilungsperiode A. Durch Abtastung der periodischen Messteilung 1 mittels einer Abtasteinheit 2 werden in bekannter Weise gegeneinander phasenverschobene sinusförmige analoge Abtastsignale SIN und COS gleicher Frequenz f generiert, wobei

$$SIN = A \sin (2\pi X / \lambda)$$

$$COS = A \cos (2\pi X / \lambda)$$

mit

A Länge der Signalperiode
X Position
A Signalamplitude

Diese sinusförmigen analogen Abtastsignale SIN, COS mit der Signalperiode λ werden als Eingangssignale einer Baueinheit 3 zugeführt. Die Baueinheit 3 ist dazu ausgelegt aus diesen analogen Abtastsignalen SIN, COS gegeneinander phasenverschobene sinusförmige analoge Ausgangssignale SINk und COSk vervielfachter Frequenz k x f zu erzeugen, also eine Frequenzvervielfachung durchzuführen. Frequenzvervielfachung bedeutet dabei ein analoges Ausgangssignal SINk, COSk mit k-facher Frequenz bzw. mit k-facher Unterteilung der Signalperiode λ zu erzeugen.
Der Vervielfachungsfaktor bzw. Multiplikator k ist wählbar. Er wird beispielsweise bereits bei der Fertigung der Positionsmesseinrichtung gewählt und fest vorgegeben. Alternativ kann an der Positionsmesseinrichtung auch die Möglichkeit geschaffen sein, dass ein Anwender die Auswahl des Faktors k aus mehreren Möglichkeiten vornehmen kann.
Die Baueinheit 3 umfasst eine Umsetzeinrichtung 4, welcher die sinusförmigen analogen Abtastsignale SIN und COS zugeführt sind. Die Umsetzeinrichtung 4 ist dazu ausgelegt aus den analogen Abtastsignalen SIN, COS gegeneinander phasenverschobene sinusförmige digitale Ausgangssignale DSINk, DCOSk zu erzeugen, welche gegenüber den sinusförmigen analogen Abtastsignalen SIN, COS eine vervielfachte Frequenz k x f aufweisen.

Die Umsetzeinrichtung 4 hat somit einerseits die Funktion eine Frequenzvervielfachung durchzuführen und andererseits die Aufgabe die analogen Abtastsignale SIN, COS in digitale Ausgangssignale DSINk, DCOSk umzuwandeln. Die sinusförmigen digitalen Ausgangssignale DSINk, DCOSk sind jeweils definiert durch eine Folge von Bitmustern, die in ihrer Abfolge eine Sinusform repräsentieren.

Die digitalen Ausgangssignale DSINk, DCOSk werden einem Digital-Analog Wandler 5 der Baueinheit 3 zugeführt, der dazu ausgelegt ist daraus die sinusförmigen analogen Ausgangssignale SINk und COSk zu erzeugen. Die in Form von digitalen Daten am Digital-Analog Wandler 5 anstehende Information (parallel anstehendes Datenwort) wird in eine analoge Repräsentation als Strom oder Spannung umgewandelt. Jedem anstehenden Bitmuster einer bestimmten Wortbreite ist ein bestimmter diskreter analoger Stromwert oder Spannungswert zugeordnet, wobei

$$SINk = A \sin((\frac{2\pi x}{\lambda})\, k)$$

$$COSk = A \cos((\frac{2\pi x}{\lambda})\, k)$$

mit

A Länge der Signalperiode
X Position
A Signalamplitude
k Unterteilungsfaktor bzw. Vervielfachungsfaktor

Hier wird davon ausgegangen, dass die Signalamplitude A der analogen Ausgangssignale SINk, COSk identisch der Amplitude A der analogen Abtastsignale SIN, COS ist. Die Signalamplituden der analogen Ausgangssignale SINk, COSk können aber auch von den Amplituden der analogen Abtastsignale SIN, COS abweichen.

Da die Folge der Eingangssignale des Digital-Analog Wandlers 5 jeweils eine Sinusform repräsentieren, kann der Digital-Analog Wandler 5 eine lineare Quantisierungskennlinie aufweisen. Dabei besteht ein linearer Zusammenhang zwischen Eingangsgröße und Ausgangsgröße.

Erfindungsgemäß ist die Umsetzeinrichtung 4 der Baueinheit 3 dazu ausgelegt in Abhängigkeit der Frequenz f des sinusförmigen analogen Abtastsignals SIN, COS die Betriebsart derart zu ändern, dass dem Digital-Analog Wandler 5 bei hohen Frequenzen des sinusförmigen analogen Abtastsignals SIN, COS das sinusförmige digitale Ausgangssignal DSINk, DCOSk mit höherer Ausgangsrate und mit geringerer Wortbreite zugeführt wird als bei niederen Frequenzen des sinusförmigen analogen Abtastsignals SIN, COS.

Die Aktualisierung der digitalen Information, die am Digital-Analog Wandler 5 ansteht, erfolgt somit bei hohen Frequenzen der Abtastsignale SIN, COS in kleineren zeitlichen Abständen als bei kleinen Frequenzen der Abtastsignale SIN, COS.

Zusätzlich wird dem Digital-Analog Wandler 5 das digitale Ausgangssignal DSINk, DCOSk bei hohen Frequenzen der Abtastsignale SIN, COS mit geringerer Wortbreite zugeführt als bei niederen Frequenzen. Geringere Wortbreite bedeutet verringerte Anzahl von Datenbits und somit verringerte Auflösung.

Der Umsetzeinrichtung 4 ist hierzu ein zur Frequenz der sinusförmigen analogen Abtastsignale SIN, COS proportionales Signal f zugeführt. In Abhängigkeit dieses Signals f erfolgt die frequenzabhängige Ausgabe an den nachgeschalteten Digital-Analog Wandler 5.

Zur Bildung dieses frequenzabhängigen Signals f ist ein Baustein 6 vorgesehen, dem zumindest eines der analogen Abtastsignale SIN, COS zugeführt ist. Das frequenzabhängige Signal f kann im Baustein 6 beispielsweise ermittelt werden, indem die Anzahl der Signalperioden pro Zeiteinheit ermittelt wird oder die Anzahl von Nulldurchgängen pro Zeiteinheit bei nullsymmetrischen Abtastsignalen SIN, COS. Eine weitere Möglichkeit besteht darin, die Anzahl von Takten eines Taktgebers innerhalb einer Signalperiode oder innerhalb zweier Nulldurchgänge zu ermitteln.

Die Baueinheit 3 ist vorzugsweise Bestandteil der Abtasteinheit 2, beispielsweise in einem ASIC integriert.

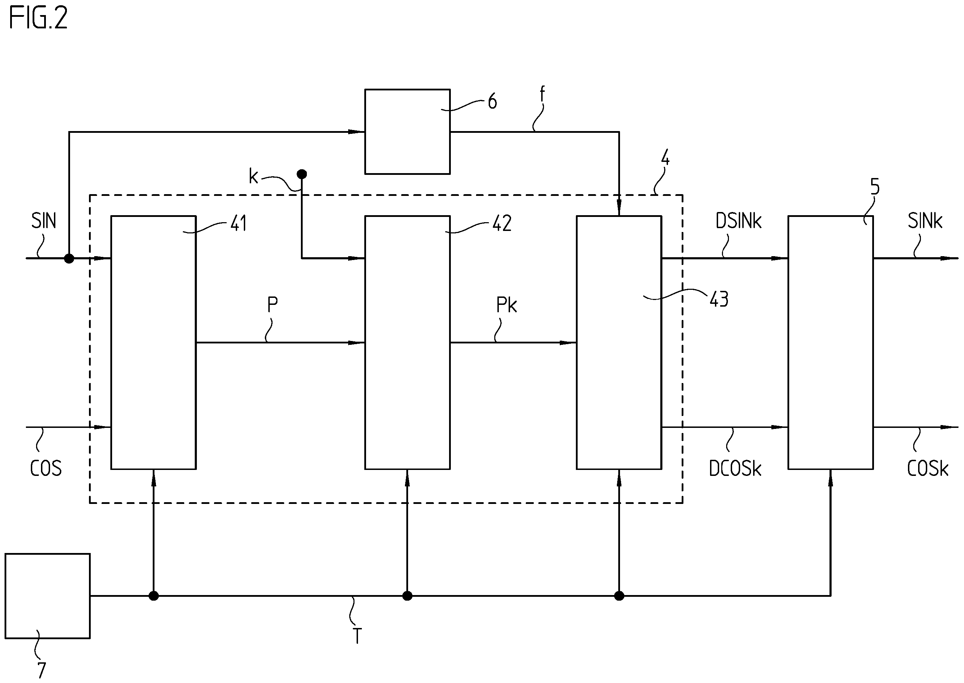

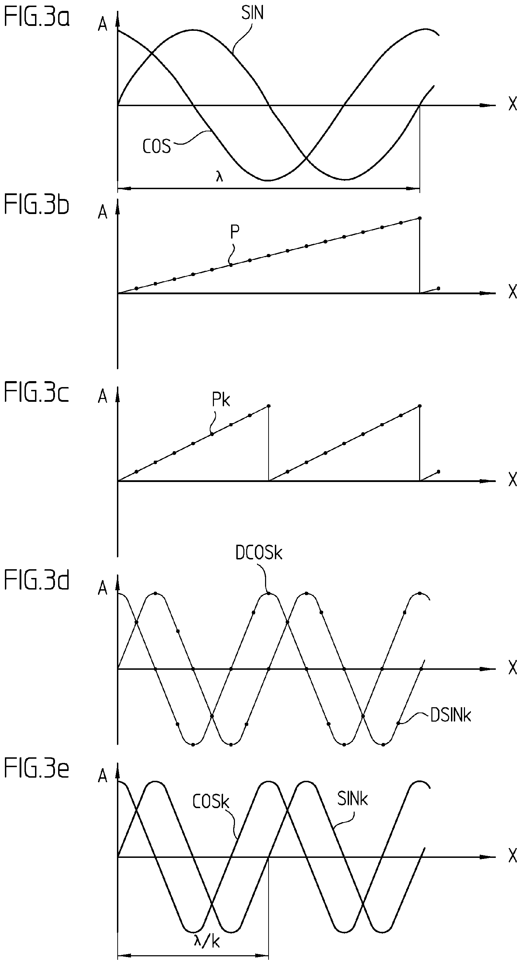

Figur 2 zeigt ein Blockschaltbild, in dem Einzelheiten des Aufbaus gemäß Figur 1 dargestellt sind. In den Figuren 3a bis 3e sind die an den Bauteilen anstehenden Eingangssignale und Ausgangssignale dargestellt.

Die Umsetzeinrichtung 4 umfasst eine Interpolationseinheit 41, welcher die analogen Abtastsignale SIN, COS zugeführt sind und welche dazu ausgelegt ist daraus ein die absolute Position innerhalb einer Periode λ der sinusförmigen analogen Abtastsignale SIN, COS repräsentierendes digitales Positionssignal P zu erzeugen. Die Funktion der Interpolationseinheit 4 ist hinlänglich bekannt, sie umfasst beispielsweise für jedes der Abtastsignale SIN, COS einen A/D-Wandler, und eine nachgeordnete Schaltung, in der durch Arcus-Tangens-Bildung der beiden anstehenden digitalisierten Abtastsignale das Positionssignal P mit der Periode λ generiert wird.

Die Abtastsignale SIN, COS sind in Figur 3a dargestellt, dabei ist die Amplitude A in Abhängigkeit der Lage bzw. Position X aufgetragen. Die Amplitude A kann ein Spannungswert oder ein Stromwert sein. Der sägezahnförmige Verlauf des daraus generierten digitalen Positionssignals P ist in Figur 3b dargestellt, der Amplitudenverlauf wird dabei durch die Abfolge von Digitalwörtern repräsentiert, wobei in der Figur 3b jeder Punkt einem Digitalwort entspricht.

Das digitale Positionssignal P ist einem Multiplikator 42 zugeführt, welcher aus dem digitalen Positionssignal P ein digitales Positionssignal Pk mit vervielfachter Frequenz erzeugt. Das Ausgangssignal Pk hat die Frequenz k x f, im Beispiel ist k = 2. Es wird also eine Periode λ der Abtastsignale SIN, COS mit dem Faktor k unterteilt. Das digitale Positionssignal Pk ist in Figur 3c dargestellt, wobei auch hier jeder Punkt durch ein Digitalwort definiert ist.

Das Positionssignal Pk wird einem Funktionsgenerator 43 zugeführt, der daraus die sinusförmigen digitalen Ausgangssignale DSINk, DCOSk erzeugt. Diese Ausgangssignale DSINk, DCOSk sind in Figur 3d dargestellt. Jeder Punkt ist dabei wiederum durch ein Digitalwort definiert. Der Funktionsgenerator 43 hat die Funktion einem Positionswert Pk innerhalb der Periode λ/k einen digitalen Wert - also ein Datenwort - für Sinus bzw. Cosinus zuzuordnen. Diese Zuordnung kann auf verschiedenste Weise erfolgen. So kann der Funktionsgenerator 43 die sinusförmigen digitalen Ausgangssignale DSINk, DCOSk mit Tabellen (z.B. ROM) oder durch einen Berechnungsalgorithmus generieren. Bekannte Berechnungsalgorithmen sind der Cordic-Algorithmus oder die Taylor Series Approximation.

Der Digital-Analog Wandler 5 erzeugt aus den digitalen Ausgangssignalen DSINk, DCOSk die sinusförmigen analogen Ausgangssignale SINk, COSk, die in Figur 3e dargestellt sind.

In den schematischen Darstellungen der Figuren 1 und 2 ist nur ein Digital-Analog Wandler 5 dargestellt. In der Praxis wird aber für jedes der digitalen Eingangssignale DSINk, DCOSk jeweils ein separater Digital-Analog Wandler vorgesehen sein.

Die Interpolationseinheit 41, der digital arbeitende Multiplikator 42, der Funktionsgenerator 43 und der Digital-Analog Wandler 5 arbeiten im dargestellten Beispiel gemeinsam mit dem gleichen Systemtakt T von beispielsweise 40MHz, der von einem Taktgeber 7 vorgegeben ist. Mit diesem Systemtakt T werden die aktuellen analogen Amplitudenwerte der Abtastsignale SIN, COS von der Interpolationseinheit 41 übernommen, d. h. gesampelt, analog-digital gewandelt und interpoliert. In diesem Systemtakt T werden auch die analogen Ausgangssignale SINk, COSk im Digital-Analog Wandler 5 erzeugt.

Der Funktionsgenerator 43 ändert in Abhängigkeit der aktuellen Frequenz der Abtastsignale SIN, COS - also in Abhängigkeit der anstehenden frequenzabhängigen Größe f - die Betriebsweise derart, dass dem Digital-Analog Wandler 5 bei hohen Frequenzen der sinusförmigen analogen Abtastsignale SIN, COS die sinusförmigen digitalen Ausgangssignale DSINk, DCOSk mit höherer Ausgangsrate und mit geringerer Wortbreite zugeführt werden als bei niederen Frequenzen der sinusförmigen analogen Abtastsignale SIN, COS.

Höhere Ausgangsrate bedeutet dabei, dass dem Digital-Analog Wandler 5 die digitale Information in kleineren zeitlichen Abständen zugeführt wird, bzw. die Aktualisierung der digitalen Information, die am Digital-Analog Wandler 5 ansteht, in kleineren zeitlichen Abständen erfolgt als bei kleineren Frequenzen der Abtastsignale SIN, COS.

Zusätzlich wird dem Digital-Analog Wandler das digitale Ausgangssignal DSINk, DCOSk bei hohen Frequenzen der Abtastsignale SIN, COS mit geringerer Wortbreite zugeführt als bei niederen Frequenzen. Das bedeutet, dass sich die Wortbreite frequenzabhängig ändert. In der Praxis werden niederwertigere Bits (LSB's) des Datenwortes DSINk, DCOSk ausgeblendet, indem diese auf 0 gesetzt werden bzw. maskiert werden. Dadurch wird erreicht, dass die bei hohen Frequenzen instabilen Bits vom Digital-Analog Wandler 5 sozusagen nicht gesehen werden und der Digital-Analog Wandler stabiler und genauer wandeln kann.

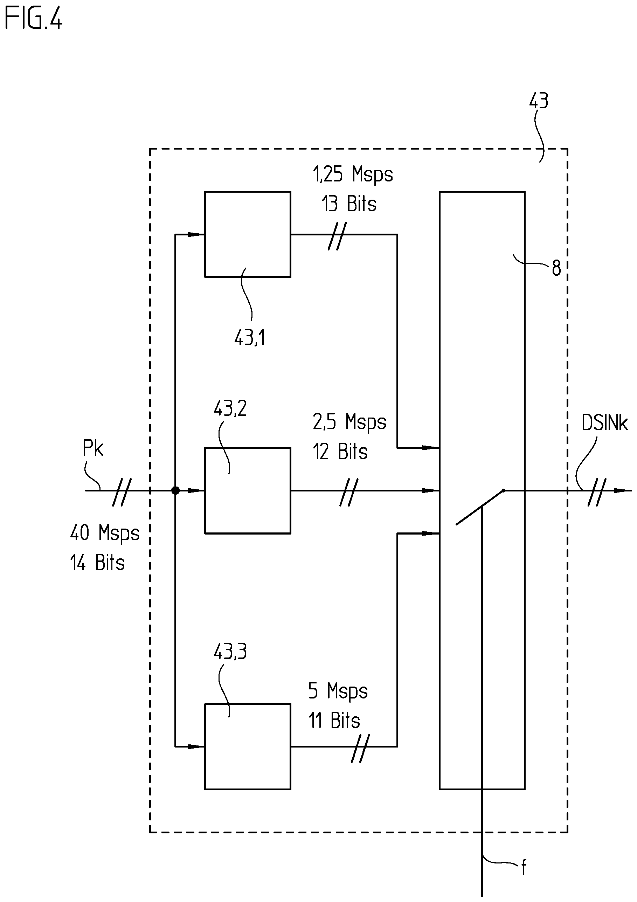

Mit Hilfe der Figur 4 wird die Erfindung anhand der Erzeugung des Ausgangssignals DSINk noch näher erläutert. Der Funktionsgenerator 43 umfasst hierzu mehrere Blöcke 43.1, 43.2, 43.3, denen jeweils das Positionssignal Pk mit einer Wortbreite von beispielsweise 14 Bits und einer Rate von 40 Msps zugeführt ist. Msps ist die Abkürzung für Million Samples pro Sekunde. Die Blöcke 43.1, 43.2, 43.3 sind parallel angeordnet und arbeiten parallel. Im Beispiel sind drei dieser Blöcke 43.1, 43.2, 43.3 dargestellt, die Erfindung ist aber nicht darauf beschränkt, in der Praxis werden in der Regel mehr als drei derartige Blöcke 43.1, 43.2, 43.3 vorhanden sein.

Der erste Block 43.1 ist dazu ausgelegt Datenwörter mit einer Wortbreite von 13 Bits und einer Ausgangsrate von 1,25 Msps parallel auszugeben. Das bedeutet, dass am Ausgang jeweils ein neues Datenwort in Abständen von 800 ns ansteht.

Der zweite Block 43.2 ist dazu ausgelegt Datenwörter mit einer Wortbreite von 12 Bits und einer Ausgangsrate von 2,5 Msps parallel auszugeben. Das bedeutet, dass am Ausgang jeweils ein neues Datenwort in Abständen von 400 ns ansteht. Wortbreite 12 Bits heißt, dass das LSB des 13 Bit Wortes ausgeblendet (maskiert) wird bzw. permanent auf 0 gesetzt ist.

Der dritte Block 43.3 ist dazu ausgelegt Datenwörter mit einer Wortbreite von 11 Bits und einer Ausgangsrate

6

von 5 Msps parallel auszugeben. Das bedeutet, dass am Ausgang jeweils ein neues Datenwort in Abständen von 200 ns ansteht. Wortbreite 11 Bits heißt, dass die letzten zwei LSB's des 13 Bit Wortes ausgeblendet (maskiert) werden bzw. permanent auf 0 gesetzt sind.

Die Ausgänge aller Blöcke 43.1, 43.2, 43.3 sind einer Schalteinheit 8 zugeführt und in Abhängigkeit der aktuellen Frequenz des Abtastsignals SIN - also in Abhängigkeit des frequenzabhängigen Signals f - wird einer dieser Ausgänge der Blöcke 43.1, 43.2, 43.3 dem Digital-Analog Wandler 5 zugeführt.

Die Schalteinheit 8 schaltet beispielsweise den Ausgang des Blocks 43.1 auf den Ausgang des Frequenzgenerators 43 bei Frequenzen 0 Hz bis 5 kHz, den Ausgang des Blocks 43.2 bei Frequenzen von 5 kHz bis 20 kHz und den Ausgang des Blocks 43.3 bei Frequenzen größer 20 kHz.

Die Wandlungsgeschwindigkeit des Digital-Analog Wandlers 5 ist bei gegebener Wortbreite des anstehenden Datenwortes proportional zur Rate, mit der sich dieses ändert. Durch die Erfindung wird nun erreicht, dass sich bei höheren Frequenzen des Abtastsignals SIN und somit bei höheren Relativgeschwindigkeiten zwischen der Messteilung 1 und der Abtasteinheit 2 sich das am Digital-Analog Wandler 5 anstehende Datenwort schneller ändert als bei niederen Frequenzen. Gleichzeitig wird die Wortbreite des am Digital-Analog Wandlers 5 anstehenden Datenwortes bei höheren Frequenzen des Abtastsignals SIN verringert.

Durch diese erfindungsgemäßen Maßnahmen sind somit die dynamischen Eigenschaften des Digital-Analog Wandlers 5 optimiert, so dass die analogen Ausgangssignale SINk, COSk bei allen Frequenzen der Abtastsignale SIN, COS eine hohe Güte aufweisen. Durch die Erfindung ist sichergestellt, dass auch bei hohen Frequenzen der Abtastsignale SIN, COS innerhalb einer Signalperiode eine ausreichende Anzahl an Digitalwerten dem Digital-Analog Wandler 5 zugeführt werden, dabei wird in Kauf genommen, dass jeder dieser Digitalwerte eine relativ geringe Wortbreite aufweist.

In nicht gezeigter Weise kann dem Digital-Analog Wandler 5 ein Filter zur Glättung der analogen Ausgangssignale SINk, COSk nachgeschaltet sein. Der Filter kann beispielsweise ein Tiefpassfilter sein.

Im erläuterten Ausführungsbeispiel werden der Baueinheit 3 zwei um 90° gegeneinander phasenverschobene Abtastsignale SIN, COS als Eingangssignale zugeführt. Die Erfindung ist aber nicht darauf beschränkt, in nicht dargestellter Weise kann der Baueinheit 3 auch nur ein einziges sinusförmige Abtastsignal oder auch mehr als zwei gegeneinander phasenverschobene Abtastsignale, insbesondere drei um 120° gegeneinander phasenverschobene sinusförmige Abtastsignale, zugeführt werden.

Die Erfindung ist bei allen physikalischen Abtastprinzipien erfolgreich einsetzbar. Die Messteilung kann optisch, magnetisch, induktiv oder kapazitiv abtastbar ausgestaltet sein.

Die Positionsmesseinrichtung kann als Linearmesseinrichtung oder als Winkelmesseinrichtung ausgebildet sein, wobei in den oben angegebenen Formeln die Position X eine Weglänge oder einen Winkel repräsentiert.

**Patentansprüche**

1. Positionsmesseinrichtung mit einer Baueinheit (3), zur Variation der Signalperiode (A) zumindest eines positionsabhängigen sinusförmigen analogen Abtastsignals (SIN, COS), umfassend

   - eine Umsetzeinrichtung (4), welcher das sinusförmige analoge Abtastsignal (SIN, COS) zugeführt ist und welche dazu ausgelegt ist daraus zumindest ein sinusförmiges digitales Ausgangssignal (DSINk, DCOSk) mit gegenüber dem sinusförmigen analogen Abtastsignal (SIN, COS) variierter Signalperiode ($\lambda$/k) zu erzeugen, und
   - einen Digital-Analog Wandler (5), welcher dazu ausgelegt ist aus dem sinusförmigen digitalen Ausgangssignal (DSINk, DCOSk) ein sinusförmiges analoges Ausgangssignal (SINk, COSk) variierter Signalperiode ($\lambda$/k) zu erzeugen,

   **dadurch gekennzeichnet dass**
   die Umsetzeinrichtung (4) dazu ausgelegt ist in Abhängigkeit der Frequenz (f) des sinusförmigen analogen Abtastsignals (SIN, COS) die Betriebsart derart zu ändern, dass dem Digital-Analog Wandler (5) bei hohen Frequenzen des sinusförmigen analogen Abtastsignals (SIN, COS) das sinusförmige digitale Ausgangssignal (DSINk, DCOSk) mit höherer Ausgangsrate und mit geringerer Wortbreite zugeführt wird als bei niederen Frequenzen des sinusförmigen analogen Abtastsignals (SIN, COS).

2. Positionsmesseinrichtung nach Anspruch 1, wobei der Analog-Digital Wandler (5) eine lineare Quantisierungskennlinie aufweist.

3. Positionsmesseinrichtung nach einem der vorhergehenden Ansprüche, umfassend einen Baustein (6) zur Ermittlung eines zur Frequenz des zumindest einen sinusförmigen analogen Abtastsignals (SIN, COS) proportionalen Signals (f), wobei dieses Signal (f) der Umsetzeinrichtung (4) zugeführt ist.

4. Positionsmesseinrichtung nach einem der vorhergehenden Ansprüche, wobei die Umsetzeinrichtung (4) dazu ausgelegt ist, parallel mehrere digitale Ausgangssignale (DSINk, DCOSk) zu erzeugen, wobei die mehreren digitalen Ausgangssignale (DSINk, DCOSk) unterschiedliche Ausgangsraten und unterschiedliche Wortbreiten aufweisen.

5. Positionsmesseinrichtung nach Anspruch 4, wobei eine Schalteinheit (8) vorgesehen ist, der die mehreren digitalen Ausgangssignale (DSINk, DCOSk) parallel zugeführt sind und die dazu ausgelegt ist, in Abhängigkeit der Frequenz (f) des sinusförmigen analogen Abtastsignals (SIN, COS) eines dieser digitalen Ausgangssignale (DSINk, DCOSk) dem Digital-Analog Wandler (5) zuzuführen.

6. Positionsmesseinrichtung nach einem der vorhergehenden Ansprüche, wobei der Baueinheit (3) im Betrieb mehrere gegeneinander phasenverschobene sinusförmige analoge Abtastsignale (SIN, COS) gleicher Frequenz (f) zugeführt sind.

7. Positionsmesseinrichtung nach Anspruch 6, wobei der Baueinheit (3) im Betrieb zwei um 90° gegeneinander phasenverschobene sinusförmige analoge Abtastsignale (SIN, COS) zugeführt sind.

8. Positionsmesseinrichtung nach Anspruch 6 oder 7, wobei die Umsetzeinrichtung (4)

- eine Interpolationseinheit (41) umfasst, welcher die gegeneinander phasenverschobenen sinusförmigen analogen Abtastsignale (SIN, COS) zugeführt sind und welche dazu ausgelegt ist daraus ein die Position innerhalb einer Signalperiode (A) der sinusförmigen analogen Abtastsignale (SIN, COS) repräsentierendes digitales Positionssignal (P) zu erzeugen, und
- einen Multiplikator (42) umfasst, welcher dazu ausgelegt ist aus dem digitalen Positionssignal (P) ein digitales Positionssignal (Pk) mit variierter Signalperiode ($\lambda$/k) zu erzeugen, und
- einen Funktionsgenerator (43) umfasst, welcher dazu ausgelegt ist aus dem digitalen Positionssignal (Pk) variierter Signalperiode ($\lambda$/k) das sinusförmige digitale Ausgangssignal (DSINk, DCOSk) zu erzeugen.

9. Verfahren zum Betrieb einer Positionsmesseinrichtung mit folgenden Verfahrensschritten:

- Erzeugen zumindest eines positionsabhängigen sinusförmigen analogen Abtastsignals (SIN, COS);
- Bilden zumindest eines sinusförmigen digitalen Ausgangssignals (DSINk, DCOSk) aus dem zumindest einen analogen Abtastsignal (SIN, COS), wobei dieses Ausgangssignal (DSINk, DCOSk) gegenüber dem sinusförmigen analogen Abtastsignal (SIN, COS) eine variierte Signalperiode ($\lambda$/k) aufweist;
- Bilden zumindest eines sinusförmigen analogen Ausgangssignals (SINk, COSk) aus dem zumindest einen sinusförmigen digitalen Ausgangssignal (DSINk, DCOSk) mittels eines Digital-Analog Wandlers (5);

**dadurch gekennzeichnet dass**
in Abhängigkeit der Frequenz (f) des sinusförmigen analogen Abtastsignals (SIN, COS) die Betriebsart der Positionsmesseinrichtung derart geändert wird, dass dem Digital-Analog Wandler (5) bei hohen Frequenzen des sinusförmigen analogen Abtastsignals (SIN, COS) das sinusförmige digitale Ausgangssignal (DSINk, DCOSk) mit höherer Ausgangsrate und mit geringerer Wortbreite zugeführt wird als bei niederen Frequenzen des sinusförmigen analogen Abtastsignals (SIN, COS).

10. Verfahren nach Anspruch 9, wobei parallel mehrere sinusförmige digitale Ausgangssignale (DSINk, DCOSk) aus dem zumindest einen analogen Abtastsignal (SIN, COS) gebildet werden, wobei diese digitalen Ausgangssignale (DSINk, DCOSk) gegenüber dem sinusförmigen analogen Abtastsignal (SIN, COS) eine variierte Signalperiode ($\lambda$/k) aufweisen, und wobei die mehreren digitalen Ausgangssignale (DSINk, DCOSk) unterschiedliche Ausgangsraten und unterschiedliche Wortbreiten aufweisen.

11. Verfahren nach Anspruch 10, wobei die mehreren digitalen Ausgangssignale (DSINk, DCOSk) einer Schalteinheit (8) parallel zugeführt werden, die in Abhängigkeit der Frequenz (f) des sinusförmigen analogen Abtastsignals (SIN, COS) eines dieser parallel anstehenden digitalen Ausgangssignale (DSINk, DCOSk) dem Digital-Analog Wandler (5) zuführt.

12. Verfahren nach einem der Ansprüche 9 bis 11, wobei mehrere gegeneinander phasenverschobene positionsabhängige sinusförmige analoge Abtastsignale (SIN, COS) gleicher Frequenz erzeugt werden, und wobei daraus mehrere gegeneinander phasenverschobene sinusförmige digitale Ausgangssignale (DSINk, DCOSk) gebildet werden, die gegenüber den sinusförmigen analogen Abtastsignalen (SIN, COS) eine variierte Signalperiode ($\lambda$/k) auf-

weisen.

**13.** Verfahren nach Anspruch 12, wobei der Baueinheit (3) zwei um 90° gegeneinander phasenverschobene sinusförmige analoge Abtastsignale (SIN, COS) zugeführt werden, wobei daraus zwei um 90° gegeneinander phasenverschobene sinusförmige digitale Ausgangssignale (DSINk, DCOSk) gebildet werden, die gegenüber den sinusförmigen analogen Abtastsignalen (SIN, COS) eine variierte Signalperiode ($\lambda$/k) aufweisen.

**Claims**

**1.** Positioning measuring device comprising a module (3), for varying the signal period ($\lambda$) of at least one position-dependent sinusoidal analogue scanning signal (SIN, COS), comprising

- a conversion device (4), to which the sinusoidal analogue scanning signal (SIN, COS) is fed and which is designed to generate therefrom at least one sinusoidal digital output signal (DSINk, DCOSk) having a varied signal period ($\lambda$/k) relative to the sinusoidal analogue scanning signal (SIN, COS), and
- a digital-to-analogue converter (5), which is designed to generate a sinusoidal analogue output signal (SINk, COSk) having a varied signal period ($\lambda$/k) from the sinusoidal digital output signal (DSINk, DCOSk),

**characterized in that**
the conversion device (4) is designed to change the operating mode depending on the frequency (f) of the sinusoidal analogue scanning signal (SIN, COS) in such a way that in the case of high frequencies of the sinusoidal analogue scanning signal (SIN, COS) the sinusoidal digital output signal (DSINk, DCOSk) is fed to the digital-to-analogue converter (5) with a higher output rate and with a smaller word width than in the case of low frequencies of the sinusoidal analogue scanning signal (SIN, COS).

**2.** Positioning measuring device according to Claim 1, wherein the analogue-to-digital converter (5) has a linear quantization characteristic curve.

**3.** Positioning measuring device according to either of the preceding claims, comprising a component (6) for determining a signal (f) proportional to the frequency of the at least one sinusoidal analogue scanning signal (SIN, COS), wherein said signal (f) is fed to the conversion device (4).

**4.** Positioning measuring device according to any of the preceding claims, wherein the conversion device (4) is designed to generate a plurality of digital output signals (DSINk, DCOSk) in parallel, wherein the plurality of digital output signals (DSINk, DCOSk) have different output rates and different word widths.

**5.** Positioning measuring device according to Claim 4, wherein a switching unit (8) is provided, to which the plurality of digital output signals (DSINk, DCOSk) are fed in parallel and which is designed to feed one of said digital output signals (DSINk, DCOSk) to the digital-to-analogue converter (5) depending on the frequency (f) of the sinusoidal analogue scanning signal (SIN, COS).

**6.** Positioning measuring device according to any of the preceding claims, wherein a plurality of sinusoidal analogue scanning signals (SIN, COS) phase-shifted relative to one another and having the same frequency (f) are fed to the module (3) during operation.

**7.** Positioning measuring device according to Claim 6, wherein two sinusoidal analogue scanning signals (SIN, COS) phase-shifted by 90° relative to one another are fed to the module (3) during operation.

**8.** Positioning measuring device according to Claim 6 or 7, wherein the conversion device (4)

- comprises an interpolation unit (41), to which the sinusoidal analogue scanning signals (SIN, COS) phase-shifted relative to one another are fed and which is designed to generate therefrom a digital position signal (P) representing the position within a signal period ($\lambda$) of the sinusoidal analogue scanning signals (SIN, COS), and
- comprises a multiplier (42), which is designed to generate a digital position signal (Pk) having a varied signal period ($\lambda$/k) from the digital position signal (P), and
- comprises a function generator (43), which is designed to generate the sinusoidal digital output signal (DSINk, DCOSk) from the digital position signal (Pk) having a varied signal period ($\lambda$/k).

9.  Method for operating a positioning measuring device comprising the following method steps:

    - generating at least one position-dependent sinusoidal analogue scanning signal (SIN, COS);
    - forming at least one sinusoidal digital output signal (DSINk, DCOSk) from the at least one analogue scanning signal (SIN, COS), wherein said output signal (DSINk, DCOSk) has a varied signal period ($\lambda$/k) relative to the sinusoidal analogue scanning signal (SIN, COS);
    - forming at least one sinusoidal analogue output signal (SINk, COSk) from the at least one sinusoidal digital output signal (DSINk, DCOSk) by means of a digital-to-analogue converter (5);

    **characterized in that**
    the operating mode of the positioning measuring device is changed depending on the frequency (f) of the sinusoidal analogue scanning signal (SIN, COS) in such a way that in the case of high frequencies of the sinusoidal analogue scanning signal (SIN, COS) the sinusoidal digital output signal (DSINk, DCOSk) is fed to the digital-to-analogue converter (5) with a higher output rate and with a smaller word width than in the case of low frequencies of the sinusoidal analogue scanning signal (SIN, COS).

10. Method according to Claim 9, wherein a plurality of sinusoidal digital output signals (DSINk, DCOSk) are formed in parallel from the at least one analogue scanning signal (SIN, COS), wherein said digital output signals (DSINk, DCOSk) have a varied signal period ($\lambda$/k) relative to the sinusoidal analogue scanning signal (SIN, COS), and wherein the plurality of digital output signals (DSINk, DCOSk) have different output rates and different word widths.

11. Method according to Claim 10, wherein the plurality of digital output signals (DSINk, DCOSk) are fed in parallel to a switching unit (8), which feeds one of these digital output signals (DSINk, DCOSk) present in parallel to the digital-to-analogue converter (5) depending on the frequency (f) of the sinusoidal analogue scanning signal (SIN, COS).

12. Method according to any of Claims 9 to 11, wherein a plurality of position-dependent sinusoidal analogue scanning signals (SIN, COS) phase-shifted relative to one another and having the same frequency are generated, and wherein a plurality of sinusoidal digital output signals (DSINk, DCOSk) phase-shifted relative to one another are formed therefrom, said digital output signals having a varied signal period ($\lambda$/k) relative to the sinusoidal analogue scanning signals (SIN, COS).

13. Method according to Claim 12, wherein two sinusoidal analogue scanning signals (SIN, COS) phase-shifted by 90° relative to one another are fed to the module (3), wherein two sinusoidal digital output signals (DSINk, DCOSk) phase-shifted by 90° relative to one another are formed therefrom, said digital output signals having a varied signal period ($\lambda$/k) relative to the sinusoidal analogue scanning signals (SIN, COS).

**Revendications**

1.  Dispositif de mesure de position comprenant un module (3) destiné à faire varier la période de signal ($\lambda$) d'au moins un signal d'échantillonnage analogique sinusoïdal (SIN, COS) dépendant de la position, comprenant

    - un dispositif de conversion (4) auquel est acheminé le signal d'échantillonnage analogique sinusoïdal (SIN, COS) et qui est conçu pour générer à partir de celui-ci au moins un signal de sortie numérique sinusoïdal (DSINk, DCOSk) ayant une période de signal ($\lambda$/k) modifiée par rapport à celle du signal d'échantillonnage analogique sinusoïdal (SIN, COS), et
    - un convertisseur numérique/analogique (5) qui est conçu pour générer à partir du signal de sortie numérique sinusoïdal (DSINk, DCOSk) un signal de sortie analogique sinusoïdal (SINk, COSk) ayant une période de signal ($\lambda$/k) modifiée,

    **caractérisé en ce que**
    le dispositif de conversion (4) est conçu pour modifier le mode de fonctionnement en fonction de la fréquence (f) du signal d'échantillonnage analogique sinusoïdal (SIN, COS) de telle sorte qu'aux fréquences élevées du signal d'échantillonnage analogique sinusoïdal (SIN, COS), le signal de sortie numérique sinusoïdal (DSINk, DCOSk) est acheminé au convertisseur numérique/analogique (5) avec un débit de sortie plus élevé et une largeur de mot plus faible qu'aux fréquences basses du signal d'échantillonnage analogique sinusoïdal (SIN, COS).

2.  Dispositif de mesure de position selon la revendication 1, le convertisseur analogique/numérique (5) présentant une courbe caractéristique de quantification.

3. Dispositif de mesure de position selon l'une des revendications précédentes, comprenant un composant (6) destiné à déterminer un signal (f) proportionnel à la fréquence de l'au moins un signal d'échantillonnage analogique sinusoïdal (SIN, COS), ce signal (f) étant acheminé au dispositif de conversion (4).

4. Dispositif de mesure de position selon l'une des revendications précédentes, le dispositif de conversion (4) étant conçu pour générer en parallèle plusieurs signaux de sortie numériques sinusoïdaux (DSINk, DCOSk), les plusieurs signaux de sortie numériques (DSINk, DCOSk) possédant des débits de sortie différents et des largeurs de mot différentes.

5. Dispositif de mesure de position selon la revendication 4, une unité de commutation (8) étant présente, à laquelle sont acheminés en parallèle les plusieurs signaux de sortie numériques (DSINk, DCOSk) et laquelle est conçue pour acheminer l'un de ces signaux de sortie numériques (DSINk, DCOSk) au convertisseur numérique/analogique (5) en fonction de la fréquence (f) du signal d'échantillonnage analogique sinusoïdal (SIN, COS).

6. Dispositif de mesure de position selon l'une des revendications précédentes, plusieurs signaux d'échantillonnage analogiques sinusoïdaux (SIN, COS) mutuellement déphasés et de fréquence (f) identique étant acheminés au module (3) pendant le fonctionnement.

7. Dispositif de mesure de position selon la revendication 6, deux signaux d'échantillonnage analogiques sinusoïdaux (SIN, COS) mutuellement déphasés de 90° étant acheminés au module (3) pendant le fonctionnement.

8. Dispositif de mesure de position selon la revendication 6 ou 7, le dispositif de conversion (4)

   - comprenant une unité d'interpolation (41) à laquelle sont acheminés les signaux d'échantillonnage analogiques sinusoïdaux (SIN, COS) mutuellement déphasés et qui est conçue pour générer à partir de ceux-ci un signal de position numérique (P) qui représente la position à l'intérieur d'une période de signal ($\lambda$) des signaux d'échantillonnage analogiques sinusoïdaux (SIN, COS), et
   - comprenant un multiplicateur (42) qui est conçu pour, à partir du signal de position numérique (P), générer un signal de position numérique (Pk) ayant une période de signal ($\lambda$/k) modifiée, et
   - comprenant un générateur de fonction (43) qui est conçu pour, à partir du signal de position numérique (Pk) ayant une période de signal ($\lambda$/k) modifiée, générer le signal de sortie numérique sinusoïdal (DSINk, DCOSk).

9. Procédé pour faire fonctionner un dispositif de mesure de position, comprenant les étapes suivantes :

   - génération d'au moins un signal d'échantillonnage analogique sinusoïdal (SIN, COS) dépendant de la position ;
   - formation d'au moins un signal de sortie numérique sinusoïdal (DSINk, DCOSk) à partir du signal d'échantillonnage analogique (SIN, COS), ce signal de sortie (DSINk, DCOSk) ayant une période de signal ($\lambda$/k) modifiée par rapport à celle du signal d'échantillonnage analogique sinusoïdal (SIN, COS) ;
   - formation d'au moins un signal de sortie analogique sinusoïdal (SINk, COSk) à partir de l'au moins un signal de sortie numérique sinusoïdal (DSINk, DCOSk) au moyen d'un convertisseur numérique/analogique (5) ;

   **caractérisé en ce que**
   le mode de fonctionnement du dispositif de mesure de position est modifié en fonction de la fréquence (f) du signal d'échantillonnage analogique sinusoïdal (SIN, COS) de telle sorte qu'aux fréquences élevées du signal d'échantillonnage analogique sinusoïdal (SIN, COS), le signal de sortie numérique sinusoïdal (DSINk, DCOSk) est acheminé au convertisseur numérique/analogique (5) avec un débit de sortie plus élevé et une largeur de mot plus faible qu'aux fréquences basses du signal d'échantillonnage analogique sinusoïdal (SIN, COS).

10. Procédé selon la revendication 9, plusieurs signaux de sortie numériques sinusoïdaux (DSINk, DCOSk) étant générés en parallèle à partir de l'au moins un signal d'échantillonnage analogique (SIN, COS), ces signaux de sortie numériques (DSINk, DCOSk) ayant une période de signal ($\lambda$/k) modifiée par rapport à celle du signal d'échantillonnage analogique sinusoïdal (SIN, COS) et les plusieurs signaux de sortie numériques (DSINk, DCOSk) possédant des débits de sortie différents et des largeurs de mot différentes.

11. Procédé selon la revendication 10, les plusieurs signaux de sortie numériques (DSINk, DCOSk) étant acheminés en parallèle à une unité de commutation (8) qui achemine l'un de ces signaux de sortie numériques (DSINk, DCOSk) appliqués en parallèle au convertisseur numérique/analogique (5) en fonction de la fréquence (f) du signal d'échantillonnage analogique sinusoïdal (SIN, COS).

12. Procédé selon l'une des revendications 9 à 11, plusieurs signaux d'échantillonnage analogiques sinusoïdaux (SIN, COS) dépendant de la position et mutuellement déphasés de fréquence identique étant générés, et plusieurs signaux de sortie numériques sinusoïdaux (DSINk, DCOSk) mutuellement déphasés étant générés à partir de ceux-ci, lesquels présentent une période de signal ($\lambda$/k) modifiée par rapport à celle des signaux d'échantillonnage analogiques sinusoïdaux (SIN, COS).

13. Procédé selon la revendication 12, deux signaux d'échantillonnage analogiques sinusoïdaux (SIN, COS) mutuellement déphasés de 90° étant acheminés au module (3), deux signaux de sortie numériques sinusoïdaux (DSINk, DCOSk) mutuellement déphasés de 90° étant générés à partir de ceux-ci, lesquels présentent une période de signal ($\lambda$/k) modifiée par rapport à celle des signaux d'échantillonnage analogiques sinusoïdaux (SIN, COS).

FIG.1

EP 3 124 920 B1

# FIG.2

EP 3 124 920 B1

FIG.3a

FIG.3b

FIG.3c

FIG.3d

FIG.3e

FIG.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1399715 B1
- EP 0872714 A1

- EP 1606590 B1
- EP 0B72714 A1